**Europäisches Patentamt**

**European Patent Office**

**Office européen des brevets**

(19)

(11) Veröffentlichungsnummer: **0 077 467**
**B1**

# (12) EUROPÄISCHE PATENTSCHRIFT

(45) Veröffentlichungstag der Patentschrift:
**03.06.87**

(51) Int. Cl.⁴: **F 16 H 7/18**

(21) Anmeldenummer: **82108639.4**

(22) Anmeldetag: **18.09.82**

(54) **Antriebseinrichtung mit einer Kugelgelenkkette.**

(30) Priorität: **16.10.81  CH 6620/81**

(43) Veröffentlichungstag der Anmeldung:
**27.04.83 Patentblatt 83/17**

(45) Bekanntmachung des Hinweises auf die Patenterteilung:
**03.06.87 Patentblatt 87/23**

(84) Benannte Vertragsstaaten:
**AT BE DE FR GB IT NL SE**

(56) Entgegenhaltungen:
**DE - C - 839 148**
**FR - A - 2 357 444**
**US - A - 576 105**
**US - A - 578 556**
**US - A - 2 526 173**
**US - A - 3 718 051**

(73) Patentinhaber: **Feramatic AG, CH-8340 Hinwil (CH)**

(72) Erfinder: **Eberle, Jürg, Sonnenhofstrasse 8,**
**CH-8340 Hinwil (CH)**

(74) Vertreter: **Patentanwälte Schaad, Balass & Partner,**
**Dufourstrasse 101 Postfach, CH-8034 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine Antriebseinrichtung mit einer Kugelgelenkskette gemäss Oberbegriff des Anspruches 1.

Bei der aus der US-A-4 151 754 und der entsprechenden FR-A-2 357 444 bekannten Antriebsein-richtung dieser Art sind die Kettenglieder im Übergangsbereich zwischen den Führungskanälen und dem Kettenrad nur unzureichend geführt. Insbesondere beim vom Kettenrad ablaufenden Trum der Kugelgelenkkette besteht daher die Gefahr des Ausknickens der Kette, und zwar vor allem dann, wenn dieser Trum Schubkräfte zu übertragen hat und daher auf Druck beansprucht wird.

Der vorliegenden Erfindung liegt nun die Aufgabe zugrunde, eine Antriebseinrichtung der eingangs genannten Art zu schaffen, die von einfachem Aufbau ist und ein einwandfreies und weit-gehend abnützungsfreies Überführen der Ket-tenglieder vom Kettenrad in den Führungskanal und umgekehrt ermöglicht.

Diese Aufgabe wird erfindungsgemäss durch die Merkmale des kennzeichnenden Teils des An-spruches 1 gelöst.

Die Kettenglieder werden an derjenigen Stelle, an der sie sich vom Kettenrad ablösen bzw. auf dieses auflaufen, sowohl vom Kettenrad wie auch vom Führungskanal geführt, der dabei die Kettenglieder um mehr als 180° umfasst. Daher ist ein abnützungsfreier, sanfter und stossfreier Übergang der Kette vom Kettenrad zum Förderkanal und umgekehrt sichergestellt.

Im Folgenden werden anhand der Zeichnung Ausführungsbeispiele des Erfindungsgegenstandes näher erläutert. Es zeigen rein schematisch:

Figur 1 einen Teil eines Kettentriebes in Seitenansicht, wobei die obere Hälfte im Schnitt dargestellt ist,

Figur 2 einen Schnitt entlang der Linie II–II in Figur 1, und

Figuren 3 und 4 in zu den Figuren 1 bzw. 2 entsprechenden Darstellungen eine Variante des in diesen Figuren 1 und 2 gezeigten Kettentriebes.

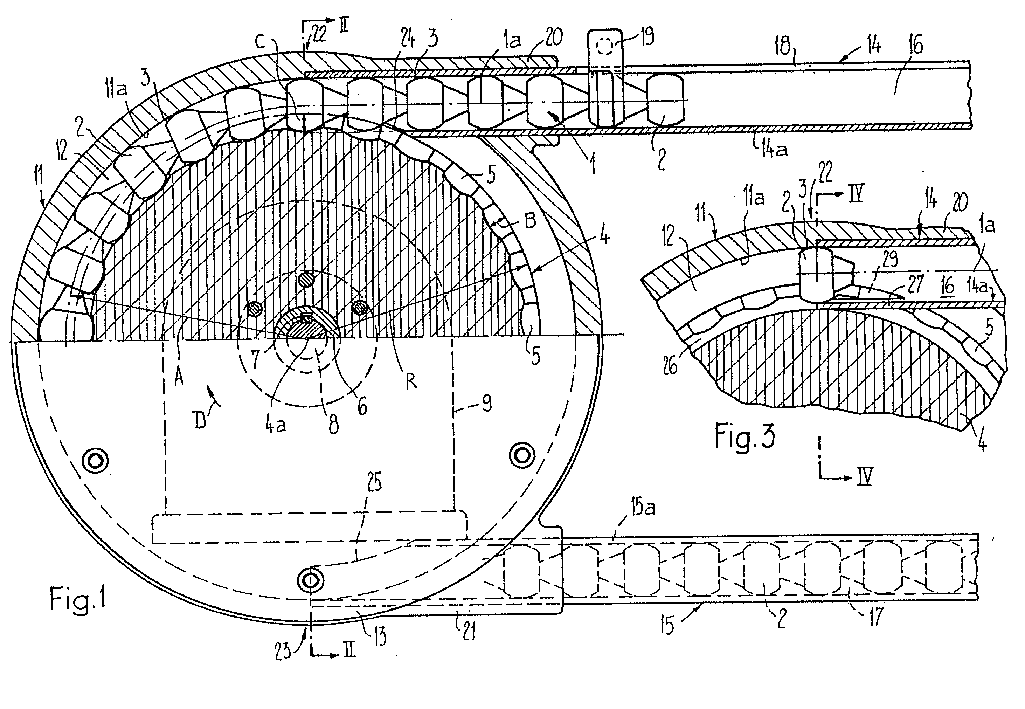

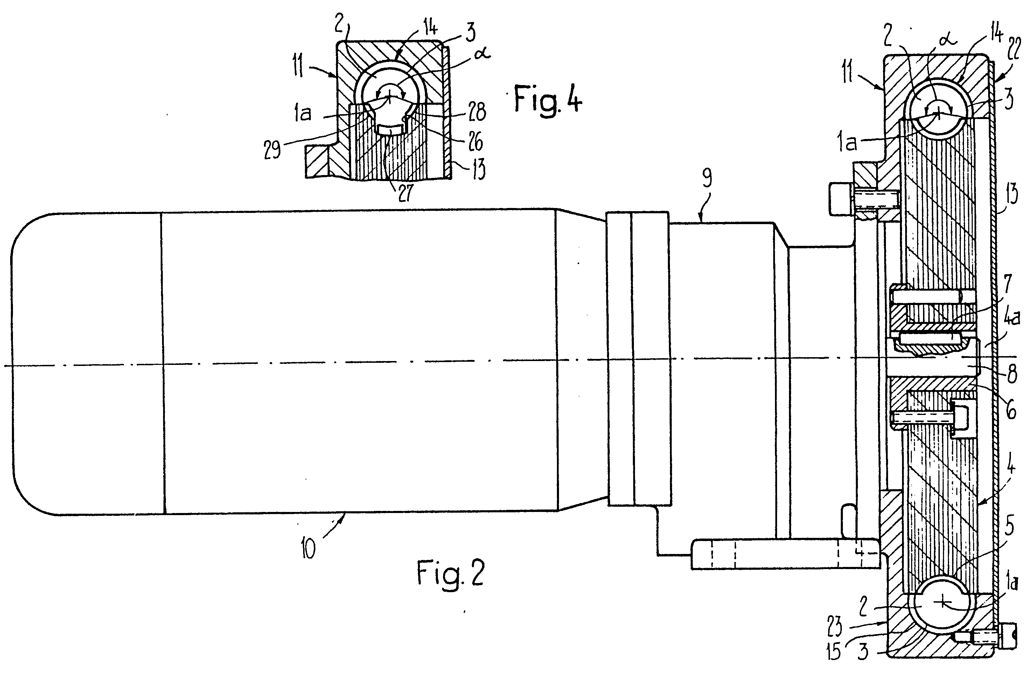

Der in den Figuren 1 und 2 nur ausschnittweise gezeigte Kettentrieb weist eine Kugelgelenkkette auf, die von bekannter Bauart ist und in der DE-A-3 121 835 näher beschrieben ist. Die Kette 1 besteht aus einzelnen Kettengliedern 2, die über Kugelgelenke miteinander verbunden sind. Jedes Kettenglied 2 weist eine sphärische Führungsfläche 3 auf, die sich in Umfangsrichtung des Kettengliedes 2 erstreckt. Die Kette 1 läuft über ein Kettenrad 4, das beim vorliegenden Ausführungsbeispiel aus Kunststoff besteht. Das Kettenrad 4 weist an seinem Umfang eine Profilierung auf, die dem Profil der Kette 1 entspricht. Dieses Umfangsprofil des Kettenrades 4 wird durch Vertiefungen 5 gebildet, in die die Kettenglieder 2 mit ihren Führungsflächen 3 zu liegen kommen. Mit dem Kettenrad 4 ist eine Nabe 6 verschraubt, die mittels eines Federkeiles 7 mit der Abtriebswelle 8 eines Getriebes 9 drehfest verbunden ist. Dieser Federkeil 7 erlaubt eine Verschiebung des Kettenrades 4 in Richtung seiner Drehachse 4a. Das Getriebe 9 wird durch einen Antriebsmotor 10 angetrieben. Die Zentrierung des Kettenrades 4 auf der Welle 8 erfolgt durch die über das Kettenrad 4 laufende Kugelgelenkkette 1.

Das Kettenrad 4 ist in einem Lagergehäuse 11 angeordnet, das in Umfangsrichtung des Kettenrades 4 in einem Abstand vom Kettenrad 4 verläuft und mit letzterem einen Zwischenraum 12 bildet. Das Lagergehäuse 11 ist auf der dem Getriebe 9 abgekehrten Seite mittels einer Abdeckplatte 13 verschlossen.

An das Kettenrad 4 schliessen zwei rohrförmige Führungskanäle 14 und 15 an. Im Innern 16 bzw. 17 der zueinander parallelen Führungskanäle 14 und 15 verläuft die Kugelgelenkkette 1, welche durch Anlage der Führungsflächen 3 der Kettenglieder 2 an der Wand 14a bzw. 15a der Führungskanäle 14, 15 in letzteren geführt ist. Der Führungskanal 14 weist einen sich in seiner Längsrichtung erstreckenden Längsschlitz 18 auf, durch den sich ein Mitnahmeelement 19 erstreckt, das an einem Kettenglied 2 befestigt ist und das mit der zu bewegenden Last koppelbar ist. Es versteht sich, dass auch an dem im andern Führungskanal 15 geführten Kettentrum ein solches Mitnahmeelement vorgesehen werden kann.

Die beiden Führungskanäle 14 und 15 erstrekken sich, in Fortsätzen 20 und 21 des Lagergehäuses 11 verlaufend, in tangentialer Richtung bis an den Umfang des Kettenrades 4 und bilden mit diesem je eine Übergangsstelle 22 bzw. 23, an denen die Kettenglieder 2 vom Kettenrad 4 in den zugeordneten Führungskanal 14 bzw. 15 und umgekehrt wechseln. An diesen Übergangsstellen 22 und 23 ragt das Kettenrad 4 ins Innere 16 bzw. 17 der Führungskanäle 14, 15, und zwar um einen Betrag C, der im wesentlichen der Tiefe B der Vertiefungen 5 des Kettenrades 4 entspricht (Figur 1). Um ein Eingreifen des Kettenrades 4 ins Innere 16, 17 der Führungskanäle 14, 15 zu ermöglichen, sind in deren Wänden 14a, 15a im Bereich der Übergangsstellen 22, 23 Ausnehmungen 24 und 25 vorgesehen. Diese Ausnehmungen 24, 25 sind derart ausgebildet, dass die Führungskanäle 14 und 15 mit kleinstmöglichstem Spiel an das Kettenrad 4 anschliessen.

Wie aus Figur 1 hervorgeht, ist der Radius R des Kettenrades kleiner als der Abstand A zwischen der Drehachse 4a des Kettenrades 4 und der Mittelachse 1a der Kugelgelenkkette 1, welche praktisch mit der Längsachse der Führungskanäle 14 und 15 zusammenfällt. Das Kettenrad 4 umgreift die in den Vertiefungen 5 liegenden Kettenglieder 2 daher nur entlang eines Bereiches, der kleiner ist als die Hälfte des Kettengliederumfanges (Figur 2). Im Bereich der Übergangsstellen 22 und 23 können daher die Führungskanäle 14 und 15 die Kettenglieder 2 entlang eines Umfangbereiches umschliessen, der entsprechend grösser ist als die Hälfte des Kettengliederumfanges. Dies ist aus Figur 2 ersichtlich, in der der dem von den Kettenkanälen 14 und 15 umfassten Umfangsbereich (Umfangsabschnitt) der Kettenglieder 2 ent-sprechende Zentriwinkel α eingezeichnet ist, der grösser als 180° ist. Im Übergangsbereich 22 bzw.

23 werden die Kettenglieder 2 somit sowohl vom Kettenrad 4 wie auch vom Führungskanal 14 bzw. 15 geführt, so dass während des Ablösens der Kettenglieder 2 vom Kettenrad 4 und des Eintrittes in den Kettenkanal 14, 15 ein ruckloser und weitgehend abnützungsfreier Übergang besteht. Dasselbe ist selbstverständlich auch beim Übergang der Kettenglieder 2 vom Führungskanal 14, 15 auf das Kettenrad 4 der Fall.

Wird, wie das in Figur 1 dargestellt ist, das Kettenrad 4 in Richtung des Pfeiles D gedreht, so läuft die Kugelgelenkkette 1 vom Führungskanal 15 auf das Kettenrad 4 auf und wird durch letzteres durch den zwischen den Übergangsstellen 23 und 22 liegenden Teil des Zwischenraumes 12 bewegt. In diesem Zwischenraum werden die Kettenglieder einerseits durch das Kettenrad 4 und andererseits durch die Innenwand 11a das Lagergehäuses 11 geführt. An der Übergangsstelle 22 lösen sich die Kettenglieder 2 vom Kettenrad und werden auf die bereits beschriebene Weise vom Führungskanal 14 übernommen, durch den sie anschliessend gestossen werden.

Dadurch, dass die Kettenglieder 2 vom Kettenrad 4 entlang eines Umfangsbereiches erfasst werden, der kleiner ist als die Hälfte des Kettengliederumfanges, wird auf die Kettenglieder 2 ein Kippmoment ausgeübt, welches zu einer einwandfreien Führung der Kettenglieder 2 im Zwischenraum 12 beiträgt. Es ist daher nicht erforderlich, dass zwischen den in die Vertiefungen 5 des Kettenrades 4 eingreifenden Kettengliedern 2 und dem Kettenrad 4 eine sehr genaue formschlüssige Verbindung besteht. Vielmehr ist es möglich, die Kettenglieder 2 mit etwas Spiel in die Vertiefungen 5 eingreifen zu lassen, was einen gewissen Ausgleich zwischen den Kettengliedern 2 erlaubt.

Die in den Figuren 3 und 4 gezeigte Ausführungsform unterscheidet sich im wesentlichen nur durch die andersartige Ausgestaltung des Endes der Führungskanäle 14, 15 im Bereich des Übergangsstelle 22 bzw. 23. Aus diesem Grund ist in diesen Figuren 3 und 4 in einer zu den Figuren 1 und 2 ähnlichen Darstellung nur der Bereich der Übergangsstelle 22 dargestellt.

Wie aus den Figuren 3 und 4 hervorgeht, weist der Führungskanal 14 an seiner bezüglich der Kettenmittelachse 1a dem Kattenrad 4 zugekehrten Hälfte einen zungenförmigen Abschnitt 27 auf, der sich bis an die Übergangsstelle 22 erstreckt. Beidseits dieser Zunge 27 sind in der Wand 14a des Führungskanals 14 Ausnehmungen 28 und 29 vorhanden, durch die das Kettenrad 4 in das Innere 16 des Kettenkanals 14 eingreift. Das Kettenrad 4 weist an seinem Umfang eine Nut 26 auf, in die die Zunge 27 des Kettenkanals 14 zu liegen kommt. Der andere Kettenkanal 15 ist an der andern Übergangsstelle 23 entsprechend ausgebildet.

Wie insbesondere aus der Figur 4 hervorgeht, werden bei dieser Lösung die Kettenglieder an zwei Abschnitten ihres Umfanges durch den Kettenkanal 14 geführt. Das ermöglicht es, den Radius R des Kettenrades 4 gleich gross zu machen wie der Abstand A zwischen der Drehachse 4a des Kettenrades 4 und der Mittelachse 1a der Kugelgelenkkette 1. Das bedeutet, dass das Kettenrad 4 mit Ausnahme der Breite der Nut 26 über eine Hälfte des Umfanges der Kettenglieder 2 an diesen angreift. In diesem Fall beträgt im Gegensatz zu der in Figur 4 gezeigten Ausführung der Zentriwinkel $\alpha = 180°$.

Es versteht sich, dass der Kettenrad 4 nicht zwingend angetrieben zu werden braucht und dass noch weitere Kettenräder vorgesehen werden können. Auch ist es möglich, die Führungskanäle 14 und 15 nicht wie gezeigt parallel zueinander, sondern miteinander einen Winkel bildend an das Kettenrad 4 heranzuführen. Bei dieser Variante liegen sich dann die Übergangsstellen 22 und 23 nicht mehr diametral gegenüber.

Anstelle der gezeigten Kugelgelenkkette 1 können mittels des beschriebenen Antriebes auch andersartig ausgebildete Kugelgelenkketten angetrieben werden, z.B. Ketten der in der DE-A-2 220 259 bzw. US-A-3 757 514 beschriebenen Art.

**Patentansprüche**

1. Antriebseinrichtung mit einer Kugelgelenkkette (1), wenigstens einem Kettenrad (4), das mit seinem gegengleich zum Kettenprofil ausgebildeten Umfangsprofil an den Kettengliedern (2) angreift, und wenigstens einem an das Kettenrad (4) anschliessenden Führungskanal (14, 15), in welchem die Kettenglieder (2) an ihrem Umfang geführt sind und der sich in tangentialer Richtung bis an den Umfang des Kettenrades (4) erstreckt, dadurch gekennzeichnet, dass der Führungskanal (14, 15) in seiner Wand (14a, 15a) mindestens eine Ausnehmung (24, 25; 28, 29) aufweist, durch die das Kettenrad (4) ins Innere (16, 17) des Führungskanals (14, 15) eingreift, um mit dem Führungskanal (14, 15) eine Übergangsstelle (22, 23) für die Kette (1) zu bilden, und dass an dieser Übergangsstelle (22, 23) die Kettenglieder (2) durch den Führungskanal (14, 15) über einen Umfangsabschnitt mit einem Zentriwinkel ($\alpha$) von mehr als 180° geführt sind und gleichzeitig das Kettenrad (4) über wenigstens einen Teil des andern Umfangsabschnittes an den Kettengliedern (2) angreift.

2. Einrichtung nach Anspruch 1, gekennzeichnet durch zwei sich bis an den Umfang des Kettenrades (4) erstreckende Führungskanäle (14, 15), von denen jeder mit dem Kettenrad (4) eine Übergangsstelle (22, 23) für die Kette (1) festlegt, wobei sich diese Übergangsstellen (22, 23) vorzugsweise etwa diametral gegenüberliegen.

3. Einrichtung nach Anspruch 1 oder 2, dadurch gekennzeichnet, dass die Kettenglieder (2) vorzugsweise sphärische Führungsflächen (3) aufweisen, die mit dem Führungskanal (14, 15) zusammenwirken und an denen das Kettenrad (4) angreift.

4. Einrichtung nach einem der Ansprüche 1–3, dadurch gekennzeichnet, dass das Kettenrad (4) an seinem Umfang Vertiefungen (5) zur Aufnahme der Kettenglieder (2) aufweist und um einen im wesentlichen der Tiefe (B) dieser Vertiefungen (5) entsprechenden Betrag (C) in den Führungskanal (14, 15) hineinragt.

5. Einrichtung nach einem der Ansprüche 1–4, dadurch gekennzeichnet, dass der Radius (R) des Kettenrades (4) kleiner ist als der Abstand (A) zwischen der Drehachse (4a) des Kettenrades (4) und der Kettenmittelachse (1a).

6. Einrichtung nach einem der Ansprüche 1–5, dadurch gekennzeichnet, dass der Führungskanal (14) an seiner dem Kettenrad (4) bezüglich der Kettenmittelachse (1a) zugekehrten Hälfte einen sich bis zur Übergangsstelle (22, 23) hin erstrekkenden, zungenartigen Abschnitt (27) aufweist, an den beidseits je eine Ausnehmung (28, 29) in der Kanalwand (14a) anschliesst, durch die das Kettenrad (4) ins Kanalinnere (16) eingreift und das Kettenrad (4) an seinem Umfang eine Nut (26) aufweist, in die der zungenartige Abschnitt (27) des Führungskanals (14) eingreift.

7. Einrichtung nach einem der Ansprüche 1–6, gekennzeichnet durch eine an der Übergangsstelle (22, 23) an den Führungskanal (14, 15) anschliessende, sich in einem Abstand entlang wenigstens eines Teils des Umfanges des Kettenrades (4) erstreckende Führung (Lagergehäuse) (11) für die vom Kettenrad (4) erfassten Kettenglieder (2).

8. Einrichtung nach einem der Ansprüche 1–7, dadurch gekennzeichnet, dass das Kettenrad (4) axialverschiebbar auf einer Welle (8) gelagert ist.

**Claims**

1. Drive device with a ball joint chain (1), at least one chain wheel (4) which, with its peripheral profile, of a configuration which matches the chain profile, engages on the chain links (2), and at least one guide channel (14, 15) which adjoins the chain wheel (4) and in which the chain links (2) are guided at their periphery and which extends in the tangential direction up to the periphery of the chain wheel (4), characterized in that the guide channel (14, 15), in its wall (14a, 15a), has at least one clearance (24, 25; 28, 29) through which the chain wheel (4) engages into the inside (16, 17) of the guide channel (14, 15) in order to form, with the guide channel (14, 15), a transition point (22, 23) for the chain (1), and that, at this transition point (22, 23), the chain links (2) are guided through the guide channel (14, 15) over a peripheral section having a centre angle ($\alpha$) of more than 180°, and at the same time the chain wheel (4) engages on the chain links (2) over at least one part of the other peripheral section.

2. Device according to Claim 1, characterized by two guide channels (14, 15) extending up to the periphery of the chain wheel (4), each of which guide channels (14, 15), with the chain wheel (4), establishes a transition point (22, 23) for the chain (1), with these transition points (22, 23) preferably being located approximately diametrically opposite one another.

3. Device according to Claim 1 or 2, characterized in that the chain links (2) preferably have spherical guide surfaces (3) which interact with the guide channel (14, 15) and on which the chain wheel (4) engages.

4. Device according to one of Claims 1 to 3, characterized in that the chain wheel (4), at its periphery, has recesses (5) for accommodating the chain links (2) and projects into the guide channel (14, 15) by an amount (C) essentially corresponding to the depth (B) of these recesses (5).

5. Device according to one of Claims 1 to 4, characterized in that the radius (R) of the chain wheel (4) is smaller than the distance (A) between the rotational axis (4a) of the chain wheel (4) and the chain centre axis (1a).

6. Device according to one of Claims 1 to 5, characterized in that the guide channel (14), on its half facing towards the chain wheel (4) with respect to the chain centre axis (1a), has a tongue-like section (27) which extends up to the transition point (22, 23) and adjoining which on both sides is in each case one clearance (28, 29) in the channel wall (14a) through which the chain wheel (4) engages into the inside (16) of the channel, and the chain wheel (4), at its periphery, has a groove (26) into which the tongue-like section (27) of the guide channel (14) engages.

7. Device according to one of Claims 1 to 6, characterized by a guide (bearing housing) (11) for the chain links (2) gripped by the chain wheel (4), which guide (11) adjoins the guide channel (14, 15) at the transition point (22, 23) and extends at a distance along at least one part of the periphery of the chain wheel (4).

8. Device according to one of Claims 1 to 7, characterized in that the chain wheel (4) is mounted in axially displaceable manner on a shaft (8).

**Revendications**

1. Dispositif d'entraînement comportant une chaîne à joints sphériques (1), au moins une roue à chaîne (4) qui, par son profil périphérique agencé avec une forme antagoniste complémentaire du profil de la chaîne, attaque les maillons (2) de la chaîne, et au moins un canal de guidage (14, 15) qui se raccorde à la roue à chaîne (4) et dans lequel les maillons (2) sont guidés sur leur pourtour et qui s'étend suivant la direction tangentielle jusqu'au niveau du pourtour de la roue à chaîne (4), caractérisé en ce que le canal de guidage (14, 15) comporte, dans sa paroi (14a, 15a), au moins un évidement (24, 25; 28, 29), par lequel la roue à chaîne (4) pénètre dans l'espace intérieur (16, 17) du canal de guidage (14, 15), pour former, avec le canal de guidage (14, 15), une zone de transition (22, 23) pour la chaîne (1), et qu'au niveau de cette zone de transition (22, 23), les maillons (2) sont guidés par le canal de guidage (14, 15) sur une section périphérique faisant un angle au centre ($\alpha$) de plus de 180° et que simultanément la roue à chaîne (4) attaque les maillons (2) sur au moins une partie de l'autre section périphérique.

2. Dispositif suivant la revendication 1, caractérisé par deux canaux de guidage (14, 15) qui s'étendent jusqu'au pourtour de la roue à chaîne (4) et dont chacune détermine, avec la roue à chaîne (4), une zone de transition (21, 23) pour la chaîne, ces zones de transition (22, 23) étant située de préférence dans des positions approximativement diamétralement opposées.

3. Dispositif selon la revendication 1 ou 2, caractérisé en ce que les maillons (2) ont de préférence des surfaces de guidage sphériques (3), qui coopèrent avec le canal de guidage (14, 15) et qui sont attaquées par la roue à chaîne (4).

4. Dispositif selon l'une des revendications 1 à 3, caractérisé en ce que la roue à chaîne (4) comporte, sur son pourtour, des renfoncements (5) servant à recevoir les maillons (2) et pénètre sur une profondeur (C) correspondant essentiellement à la profondeur (B) de ces renfoncements (5), dans le canal de guidage (14, 15).

5. Dispositif selon l'une des revendications 1 à 4, caractérisé en ce que le rayon (R) de la roue à chaîne (4) est inférieur à la distance (A) entre l'axe de rotation (4a) de la roue à chaîne (4) et l'axe médian (1a) de la chaîne.

6. Dispositif selon l'une des revendications 1 à 5, caractérisé en ce que le canal de guidage (14) comporte, dans sa moitié située du côté de la roue à chaîne (4) par rapport à l'axe médian (1a) de la chaîne, une section en forme de languette (27) qui s'étend jusqu'au niveau de la zone de transition (22, 23) et que jouxtent, des deux côtés, des évidements respectifs (28, 29) ménagés dans la paroi (14a) du canal et à travers lesquels la roue à chaîne (4) pénètre dans l'intérieur (16) du canal, et que la roue à chaîne (4) comporte sur son pourtour une gorge (26) dans laquelle s'engage la section (27) en forme de languette du canal de guidage (14).

7. Dispositif selon l'une des revendications 1 à 6, caractérisé par un guide (logement de support 11) qui se raccorde au niveau de la zone de la transition (22, 23) au canal de guidage (14, 15) et s'étend sur une distance le long d'au moins une partie du pourtour de la roue à chaîne (4) et qui est prévu pour les maillons (2) saisis par la roue à chaîne (4).

8. Dispositif selon l'une des revendications 1 à 7, caractérisé en ce que le roue à chaîne (4) est montée, de manière à pouvoir avoir un déplacement axial, sur un arbre (8).

Fig.1

Fig.3

Fig. 4

Fig. 2

0 077 467